# EUROPEAN PATENT APPLICATION

(11) **EP 1 562 029 A1**
(43) Date of publication of application: **10.08.2005**
(21) Application number: 05002412.4
(22) Date of filing: 04.02.2005
(51) Int. Cl.: G01K 7/22

(54) **Temperature sensor**

(30) Priority: 06.02.2004 JP 2004031000
(71) Applicant: Hitachi, Ltd., Tokyo 100-8280 (JP)
(72) Inventor: Abe, Hiroyuki Hitachi, Ltd., Chiyoda-ku Tokyo 100-8220 (JP); Igarashi, Shinya, Hitachinaka-shi Ibaraki 312-0062 (JP)
(74) Representative: Beetz & Partner Patentanwälte

(57) **Abstract**

The invention provides a lead-equipped temperature sensor having improved reliability in corrosion resistance. The temperature sensor comprises a device of which characteristics, including a resistance value, are changed with temperature changes, electrodes (2) electrically connected to opposite ends of the device directly or through another member, an inorganic insulating member for sealing off or covering at least a part of the electrodes (2) and the device, and leads (3) connected to the electrodes (2), wherein a coating (6) of an elastomer having viscoelastic characteristics is formed to cover at least connected portions between the electrodes (2) and the leads (3) directly or with another material interposed therebetween.

## Description

### BACKGROUND OF THE INVENTION

### 1. Field of the Invention

The present invention relates to a structure of a temperature sensor as one of electronic parts, and more particularly to a structure of an electronic part having superior corrosion resistance and being suitable for use as a lead-equipped temperature sensor to be operated under corrosive environments, which is represented by a temperature sensor for measuring the intake air temperature in an automobile.

### 2. Description of the Related Art

While temperature sensors using devices of which characteristics are changed with temperature changes have hitherto been employed in many kinds of consumer-oriented electronic equipment, there is a recent tendency that such sensors are used more and more in automobiles as well. Temperature sensors for use in an automobile serve to monitor the intake air temperature and the temperatures in various portions of the automobile, or to make control. Because the temperature sensors employed in automobiles are subjected to severer environments in use, they are required to have higher reliability than those employed in general consumer-oriented electronic equipment, in particular superior durability reliability under corrosive environments.

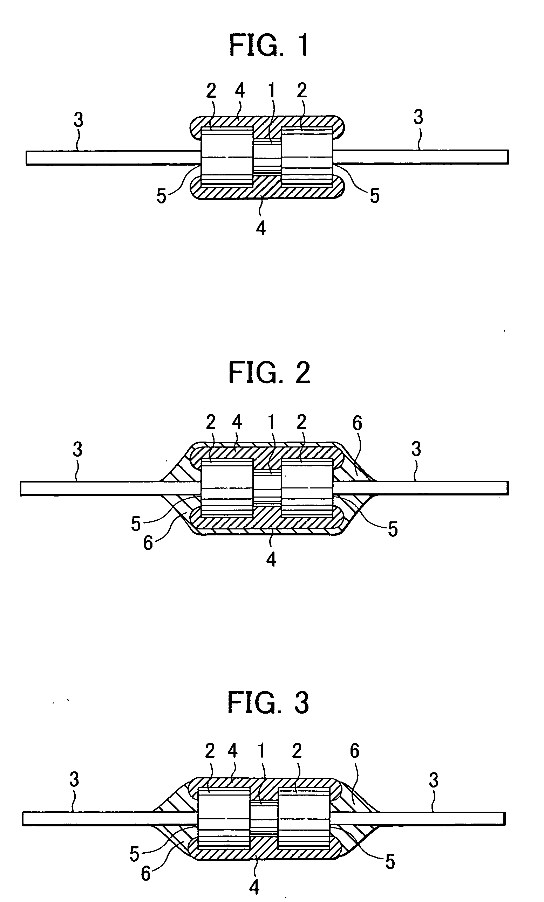

Fig. 1 shows a temperature sensor employing a thermistor chip, which is generally distributed in the market at present. The illustrated thermistor structure is disclosed in Patent Reference 1; JP,A 10-55903. In that structure, a thermistor chip having physical characteristics, e.g., a resistance value, changed with temperature changes is sealed off by using encapsulated electrodes and a glass tube. In many cases, the encapsulated electrodes are made of Dumet in which cuprous oxide (Cu₂O) is formed on the surface of a column usually made of an iron-nickel alloy with an intermediate layer of copper interposed therebetween.

The glass tube is employed as a material for fixing the thermistor chip and the encapsulated electrodes in place in a sealed-off state. The thermistor chip and the encapsulated electrodes, which are connected to electrodes at opposite ends of the thermistor chip, are both disposed in the glass tube. By baking the glass tube, the glass is caused to chemically bind with the cuprous oxide on the surface of the encapsulated electrodes. As a result, the thermistor chip and the encapsulated electrodes are fixed airtightly in place by the glass tube.

Additionally, leads made of a conductive metal, e.g., nickel leads or iron-nickel alloy leads, are connected to the encapsulated electrodes beforehand. Such a lead-equipped thermistor is usually called the axial type. In that axial type thermistor, portions where the leads are welded to the encapsulated electrodes are exposed to the outside. There is hence a possibility that, if saline water attaches to the exposed welded portions, corrosion occurs due to the saline water.

In some of automobiles, the leads or the entire welded portions including the leads are nickel- or tin-plated, by way of example, for protection against corrosion. With microscopic observation, however, a plated coating is porous in nature and underlying surfaces, i.e., surfaces of the leads and the welded portions, are partially exposed to the outside. It is difficult to form a completely sealed-off coating by plating, and therefore the plating cannot be said as ensuring a structure capable of perfectly preventing corrosion.

Patent Reference 2; Japanese Patent No. 3039277 discloses an anti-corrosion structure in which the whole of a thermistor including leads is coated with resin. This disclosed structure has electrodes and leads arranged in the U-form instead of having a pair of electrodes disposed at axial opposite ends of a thermistor chip and leads axially extending and electrically connected to the electrodes. Patent Reference 2 states that, in addition to an epoxy resin, any of other suitable synthetic resins and elastic bodies can be used as a coating material.

Problems with the known temperature sensor will be described below with reference to Fig. 1. Fig. 1 shows the sectional structure of a thermistor (temperature sensor) using a thermistor chip, which is usually called the axial type.

Reference numeral 1 denotes a thermistor chip made of a semiconductor having physical characteristics (e.g., a resistance value) changed with temperature changes. The thermistor chip 1 has electrodes formed at its opposite ends for detecting signals, and encapsulated electrodes 2 are electrically connected to the signal detecting electrodes at the opposite ends of the thermistor chip 1. In many cases, the encapsulated electrodes 2 are made of Dumet in which cuprous oxide (Cu₂O) is formed on the surface of a column usually made of an iron-nickel alloy with an intermediate layer of copper interposed therebetween.

Leads 3 are welded to the encapsulated electrodes 2 beforehand. The thermistor chip 1 and the encapsulated electrodes 2 including the leads 3, which are made of a conductive member, such as nickel, stainless steel, an iron-nickel alloy or the like and are welded to the electrodes 2, are inserted in a glass tube 4 for fixing the thermistor chip 1 in place. The glass tube 4 has a length corresponding to the total length of the thermistor chip 1 and the encapsulated electrodes 2 disposed at the opposite ends of the former. After properly positioning those components, they are heated so that the cuprous oxide on the surface of the encapsulated electrodes 2 and the glass tube 4 are melted to chemically bind with each other. As a result, the thermistor chip 1 and the encapsulated electrodes 2 are fixed in place by the glass tube 4.

When the temperature sensor having the above-described structure is used in consumer-oriented electronic products, it is ensured that the temperature sensor has a sufficient useful life and satisfactory reliability. However, when such a temperature sensor is used as one of electronic equipment loaded on an automibile, a problem may occur in reliability. Environments under which automobiles are driven for running are very severe, and a warranty period required for automobiles is much longer than that required for consumer-oriented electronic products. In the winter, particularly, a snow-melting agent sprinkled over roads dissolves in water and resulting saline water enters an engine room. Further, it can be said that, in all seasons, automobiles are under environments in which ordinary water and corrosive gases, such as sulfurized gas, acid gas and nitrogen-oxide gases, always exist.

An exposure test was actually conducted by supplying currents to thermistors of the above-described type used in consumer-oriented electronic product while the thermistors were exposed to a saline water spray (according to JIS (Japanese Industrial Standards) Z2371). As a result, most of the tested thermistors caused corrosion within 48 hours. Examination of the corroded thermistors showed that the corrosion started from a welded portion 5 between the lead 3 and the encapsulated electrode 2. As mentioned above, the encapsulated electrode 2 is made of an iron-nickel alloy. By the step of welding the lead 3 to the encapsulated electrode 2, however, the iron in the encapsulated electrode 2 is precipitated in some surface spots of the welded portion, and the iron precipitated surface spots serve as points from which corrosion of the encapsulated electrode 2 starts.

In addition, the cuprous oxide forming a surface layer of Dumet has no corrosion resistance against saline water. As described above, the automobile-loaded thermistors are currently distributed in the market as one type of thermistor in which the exposed surfaces of metal members including the lead welded portions 5 (i.e., the welded portions 5 and the encapsulated electrode 2) are entirely plated, and the other type of thermistor in which the glass tube including the welded portions are entirely coated with an epoxy resin or a polyamide resin (see Patent Reference 2). With microscopic observation using, e.g., SEM, however, a plated coating is in fact fairly porous in nature and underlying surfaces can be seen from the outside in local areas. Thus the plating cannot be said as ensuring a structure capable of perfectly preventing corrosion. Increasing the thickness of a plated film is effective in reducing the number of voids generated with insufficient plating on the metal surface, but this solution raises a problem in point of the cost, etc.

An epoxy-resin coating has disadvantages that the epoxy resin is hard in itself and the resin coating has the shape of a fillet near each end of the glass tube where the thickness of a coated resin film is changed. Therefore, strains (stresses) generated due to the difference in coefficient of linear expansion among the components may be concentrated in the fillet-shaped portion and cracks may occur. Also, the polyamide resin has such molecular characteristics that water absorptivity is very high and adhesion is poor. In the worst case, there is a risk that the coated resin film is subjected to hydrolysis and is peeled off.

Further, the term "high-polymeric elastic body" stated in Patent Reference 2 means a substance in which stresses are generated depending on a deformation and, when the deformation is returned to the original state, the stresses are also returned to the original state and the applied dynamic energy is restored. In other words, the use of the elastic body stated in Patent Reference 2 may cause the coated film to peel off due to the difference in deformation between the component and the elastic body.

### SUMMARY OF THE INVENTION

It is an object of the present invention to provide an anti-corrosion structure of a temperature sensor used under corrosive environments. Particularly, the present invention is intended to increase corrosion resistance of a joined portion between a lead and an encapsulated electrode where corrosion is most likely to occur.

To achieve the above object, the present invention provides a temperature sensor comprises a device of which characteristics, including a resistance value, are changed with temperature changes, electrodes electrically connected to opposite ends of the device directly or through another member, an inorganic insulating member for sealing off or covering at least a part of the electrodes and the device, and leads connected to the electrodes, wherein a coating of an elastomer having viscoelastic characteristics is formed to cover at least connected portions between the electrodes and the leads directly or with another material interposed therebetween.

Also, the present invention provides a temperature sensor comprising a device including a resistor, and leads extending toward opposite ends of the device and electrically connected to the device directly or through another member, wherein a coating of an elastomer having viscoelastic characteristics is formed to cover at least the resistor directly or with another material interposed therebetween.

The elastomer is made of a viscoelastic body that differs from an elastic body. The term "viscoelastic body" means a substance exhibiting viscoelastic characteristics (i.e., a substance having viscosity in addition to elasticity in spite of being a solid). In other words, the viscoelastic body means a high molecular substance having gummous elasticity at the room temperature. Like a vulcanized rubber, such a high molecular substance stretches well at the room temperature and, when an external force is removed, it substantially restores to the original form. Thus, the elastomer used in the present invention differs from the elastic body disclosed in Patent Reference 2 described above.

The elastomer having viscoelastic characteristics is coated so as to cover partial areas including the joined (connected) portions between the leads and the electrodes that are usually encapsulated, or to cover the entirety of an outer periphery of the inorganic insulating member, e.g., a glass tube, in which the (encapsulated) electrodes are disposed. With such an arrangement, a resulting elastomer coating can be kept from causing cracks in spite of the device generating heat, such as the case that the device is a thermistor. It is therefore possible to prevent corrosive liquids and gases from entering the elastomer coating even under corrosive environments.

A viscoelastic body has not only characteristics similar to those of an elastic body, but also viscoelastic characteristics. More specifically, the viscoelastic body generates stresses depending on a deformation rate. However, when an applied deformation is stopped, the stresses become 0 and the deformation remains as it is. Also, the applied dynamic energy is converted into heat. From this point of view, the viscoelastic body differs from the elastic body.

According to the present invention, since the elastomer coating is formed so as to cover at least the connected portions between the (encapsulated) electrodes and the leads or at least the resistor of the device (e.g., a temperature sensitive device), a temperature sensor having high reliability in corrosion resistance can be obtained which is especially usable as a temperature sensor for an automobile and the like which are subjected to severe corrosive environment conditions.

### BRIEF DESCRIPTION OF THE DRAWINGS

Fig. 1 is a side sectional view of a known universal thermistor (temperature sensor) using a diode device, which is called the axial type;
Fig. 2 is a sectional view of a thermistor, i.e., a temperature sensor, according to one embodiment of the present invention;
Fig. 3 is a sectional view of a thermistor, i.e., a temperature sensor, according to another embodiment of the present invention;
Figs. 4(a) and 4(b) show one example of molecular structure of a silicone elastomer used in the present invention;
Figs. 5(a) and 5(b) show another example of molecular structure of the silicone elastomer used in the present invention;
Figs. 6(a) and 6(b) show still another example of molecular structure of the silicone elastomer used in the present invention;
Fig. 7 is a sectional view of a thermal type flowmeter including the temperature sensor of the present invention, which is loaded on an automobile as one of electronic equipment;
Fig. 8 is a sectional view of a temperature sensitive resistor in the thermal type flowmeter, which represents one embodiment of the present invention according to another aspect;
Fig. 9 is a sectional view of a temperature sensitive resistor in the thermal type flowmeter, which represents another embodiment of the present invention according to another aspect; and
Fig. 10 is a sectional view of a temperature sensitive resistor in the thermal type flowmeter, which represents still another embodiment of the present invention according to another aspect.

### DESCRIPTION OF THE PREFERRED EMBODIMENTS

A coating material used in the present invention is made of an elastomer having an organic group, which is adhesive with respect to, particularly, a joined portion between an encapsulated electrode and a lead or to an inorganic insulating member covering the joined portion. The use of the elastomer ensures increased adhesion between the coating material and a target portion to be protected against corrosion, thereby providing a higher anti-corrosion effect. A temperature sensor of the present invention can be obtained by utilizing an inexpensive axial type thermistor as it is, which has hitherto been widely employed in consumer-oriented electronic equipment. Therefore, the present invention can provide an inexpensive temperature sensor with high reliability.

In the best mode for providing the temperature sensor with high reliability under corrosive environments, the joined portion of the lead to the encapsulated electrode or the entirety of an inorganic insulating member, e.g., a glass tube containing a thermistor chip and electrodes, including the lead joined portion, are coated with a silicone-based elastomer.

The elastomer is of the type having an adhesive group with respect to the connected portion between the electrode and the lead. With this feature, in spite of variations in the device temperature, the elastomer can keep good adhesion to a device or a resistor, and can prevent corrosive substances from entering the inside of the device or the resistor.

Preferably, the elastomer is made of a viscoelastic body having a modulus of elasticity not more than 500 MPa. Further, it is desired that the elastomer be a synthetic amorphous high polymer. A crystalline high polymer generally has relatively high rigidity, and therefore it is not appropriate as the coating material used in the present invention. The glass transition point of the elastomer is preferably -30°C or below. A lower glass transition point generally means a smaller modulus of viscoelasticity, and such a characteristic is preferable for the coating material used in the present invention. Further, the elastomer preferably has a hydrophobic group bonded to its main chain. The use of the elastomer having a hydrophobic group is advantageous in that, even if a corrosive liquid is attached to the elastomer surface, the liquid is repelled from the elastomer surface so that the attached liquid can be easily removed from the elastomer.

As practical examples of the elastomer, silicones made of polysiloxanes are well known materials. In particular, one preferable example is silicone having an organic group coordinated to a siloxane bond that serves as its main chain. The organic group of the silicone is preferably a methyl group or a phenyl group. Another silicone example has a fluorine-containing organic group coordinated to a siloxane bond that serves as its main chain. This kind of elastomer is superior particularly in corrosion resistance and water repellency, and therefore it is suitable for use under corrosive environments. One practical example of the elastomer having the fluorine-containing organic group is γ-trifluoropropyl polysiloxane. Note that the details of elastomers are explained in Sinzo Yamashita and Koei Komatsu, "Elastomers", Kyoritsu Shuppan Co., Ltd., Japan (1997).

### (First Embodiment)

Fig. 2 shows the structure of a temperature sensor, described below, which is employed in a first embodiment of the present invention for the purpose of overcoming the problems set forth above. A thermistor constituting a main component of the temperature sensor is the same as that shown Fig. 1, i.e., the thermistor used in consumer-oriented electronic product. The thermistor is covered with a coating 6 of the silicone elastomer made of the viscoelastic body having the adhesive group, as shown in Fig. 2, such that a glass tube 4 including lead welded portions 5 is entirely coated. The reason why the viscoelastic body having the adhesive group with respect to the coated portion is used as a material of the coating 6 resides in that the viscoelastic body has not only the function of relieving stresses, but also corrosion resistance.

An especially preferable elastomer used in the present invention is the silicone elastomer having the organic adhesive group. To increase the corrosion resistance, it is important that saline water and corrosive gases be kept from directly contacting the lead welded portions 5. If the thermistor is covered with a coating by using an elastomer having no adhesive group, the coating 6 is formed in a merely contact state in which there are neither bonding due to intermolecular forces, nor chemical bonding with respect to the lead welded portions 5 and leads 3. There is just physical adsorption at the utmost. Such a state leads to a risk that moisture and saline water may easily enter the elastomer through interface portions at the ends of the coating 6 and may form a local cell acting as a corrosion start point. Further, when the moisture and the saline water entering through the ends of the coating 6 are supplied at all times, an ion concentration reaction occurs in the moisture and the saline water so as to accelerate the formation of the local cell and to increase the corrosion progress rate. Consequently, a time until reaching a corrosion break is shortened.

In other words, when the lead welded portions 5 of the thermistor, which are susceptible to corrosion, are covered with the coating 6 of the elastomer having no adhesive group, a sufficient improvement of the corrosion resistance is not expected. However, the use of such an elastomer is more effective than the case of coating a rigid epoxy resin or an elastic body as conventional. The elastomer coating is not always required to be directly formed on the connected portions between electrodes and the leads or on the inorganic insulating member, and it may be formed with a silane coupling agent or the like interposed therebetween. The silane coupling agent has an affinity for the elastomer and hence develops good adhesion with respect to the elastomer. In that case, the elastomer is not always required to have the adhesive group with respect to the coated portion. Thus, the elastomer coating is preferably formed by utilizing the adhesive group that is directly or indirectly bondable to the coated portion.

In the present invention, it is important to form the coating 6 of the elastomer having the adhesive group. This feature means the formation of a state that the coating 6 is bonded (joined) to the coated portion with a hydrogen bond, intermolecular forces, or the anchoring effect. With the coating 6 and the coated portion bonded to each other in such a way, corrosion promoting media such as moisture and saline water can be prevented from entering the elastomer through the ends of the coating 6, and the lead welded portions 5 susceptible to corrosion can be positively protected. As a result, high reliability in corrosion resistance can be obtained.

The reasons why the elastomer is selected as a material of the coating 6 reside in points of not only increasing corrosion resistance, but also satisfying high reliability required for automobile-loaded electronic equipment to such an extent that the products are not broken even in various areas from a desert to frozen area. The thermistor coated with an epoxy resin for the purpose of protection against corrosion is somewhat effective from the viewpoint of corrosion resistance alone. However, the situation is quite changed looking from overall reliability including cold-hot cycles.

Strains (stresses) caused by temperature changes due to the difference in coefficient of linear expansion among the thermistor components are concentrated in a part of the epoxy resin applied as a coating similarly to the coating 6 in a region locating from the glass tube 4 to the lead 3 where the cross-sectional area is abruptly changed. A thermistor coated with the epoxy resin was actually subjected to cold-hot cycles while the thermistor was alternately held at the range of -30°C to 130°C for 30 minutes per cold or hot cycle. As a result, it was confirmed that cracks occurred in the above-mentioned part of the epoxy resin coating.

Stated another way, since the elastomer made of the viscoelastic body having the stress relieving effect is used as a coating material for covering the thermistor, stresses applied to the elastomer itself are relatively small and the applied stresses are relieved with a phase delay due to the viscous characteristic of the elastomer. This is ensured because of the elastomer having a low modulus of elasticity (not more than 500 MPa), even when stresses are concentrated in some region under repeated cold-hot cycles. Further, many of the silicone elastomers are water resistant and hardly react with water even if saline water is attached to them. Those characteristics prevent the formation of a local cell acting as a corrosion start point, and hence ensure positive resistance against corrosion. Note that the use of elastomers tending to react with water and to hydrolyze should be avoided though depending on the degree of hydrolysis:

In addition, even under environments of corrosive gases (such as sulfurized gas, acid gas and nitrogen-oxide gases), the silicone elastomers are free from the problem of reliability because they are basically inert and cause no chemical reactions. The first embodiment of the present invention has an advantage that a temperature sensor having high reliability in basic characteristics, such as resistance against both corrosion and cold-hot cycles, can be provided by employing, as the thermistor coating material, the elastomer made of the viscoelastic body having the adhesive group.

### (Second Embodiment)

Fig. 3 shows another embodiment of the present invention different from that shown in Fig. 2. In this second embodiment, a region where the viscoelastic elastomer is coated is defined in a different way as described below. In the above-described axial type thermistor, the welded portion 5 between the lead 3 and the encapsulated electrode 2 becomes a point at which corrosion starts when an ionic aqueous solution, e.g., saline water, is attached to the thermistor. Accordingly, this embodiment provides a structure in which the leads 3, the encapsulated electrodes 2, and interface portions at the ends of the glass tube 4 are protected by the coating 6.

Looking from the functional point of view, a region to be covered with the corrosion protective coating 6 is the welded portion 5 between the lead 3 and the encapsulated electrode 2. More specifically, in the axial type thermistor, since the thermistor chip 1 and the encapsulated electrodes 2 are fixed in place by the glass tube 4 in a sealed-off state, a portion covered with the glass tube 4 and the encapsulated electrodes 2, which are in turn covered with the glass tube 4, have a perfectly sealed-off structure. Even when saline water is attached to such a portion, that portion is inert and therefore causes no corrosion.

Further, because the encapsulated electrode 2 is made of an iron-nickel iron and has the coefficient of linear expansion close to that of the glass tube 4, the glass tube 4 is never broken even if subjected to cold-hot cycles. In the case that the lead 3 is made of a corrosion-resistant metal, such as nickel or stainless steel, or of a corrosion-resistant alloy, a possibility of corrosion of the lead 3 itself is very small and out of the problem.

This second embodiment is advantageous in that the coating 6 can be formed by using a simple dispenser, and a large-scaled apparatus is not required to form the coating 6. As a result, the products can be produced by relatively simple equipment.

### (Third Embodiment)

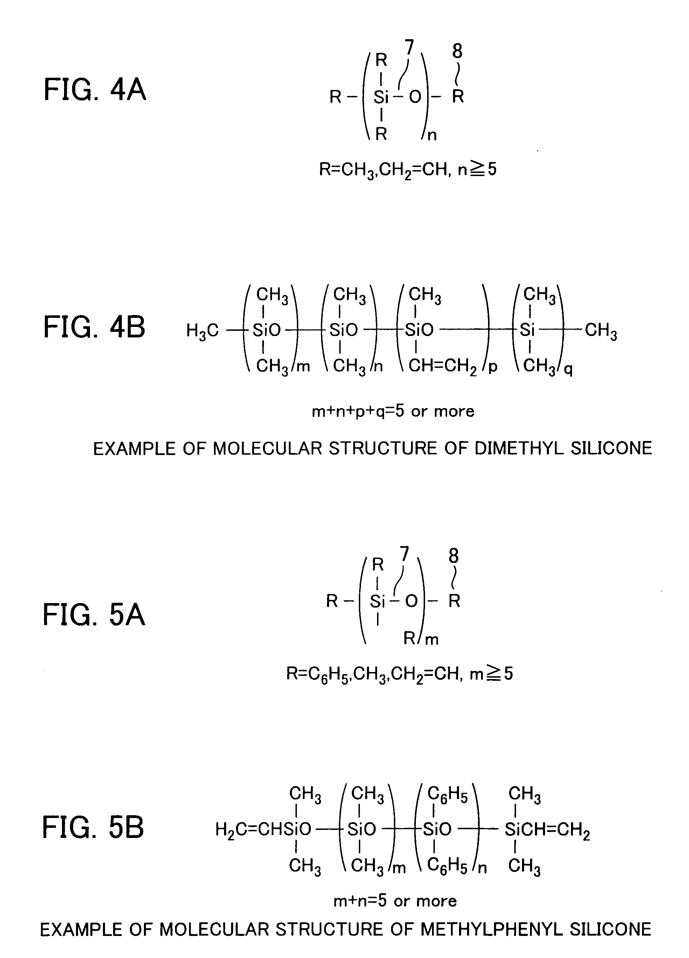

Figs. 4 and 5 show examples of molecular structure of the elastomer used to form the coating 6 covering the axial type thermistor of the present invention. Fig. 4(a) shows a general formula of one silicone elastomer in which an aliphatic group is bonded to a main chain, and Fig. 4(b) shows a specific example (dimethyl silicone) for an organic group R and the main chain shown in Fig. 4(a). Although there are various kinds of elastomers, it was confirmed from wide-ranging studies that the best result was obtained with a silicone elastomer. The silicone elastomer has a molecular structure in which a main chain in the form of a normal chain contains silicon atoms and oxygen atoms alternately bonded to each other (i.e., a siloxane bond 7), and an organic group 8 is coordinated as a side chain to the main chain. Also, Fig. 5(a) shows a general formula of another silicone elastomer in which an aromatic group is bonded to a main chain, and Fig. 5(b) shows the molecular structure of a specific example of that silicone elastomer, i.e., methylphenyl silicone.

One practically expected example of the silicone elastomer to be used as the coating material is dimethyl polysiloxane in which a methyl group is coordinated, as the organic group 8, to the silicon atom of the siloxane bond 7 shown in Fig. 4, and a vinyl group forming a cross-link point is coordinated to the side chain or the end of the main chain. Another practically expected example is a silicone elastomer having the molecular structure of methylphenyl polysiloxane in which a phenyl group is coordinated as the organic group 8 shown in Fig. 5.

Table 1 given below shows the results of exposure tests conducted by supplying a current to axial type thermistors coated with the dimethyl polysiloxane silicone having the molecular structure shown in Fig. 4 under exposure of the thermistors to a saline water spray (according to JIS Z2371). Until reaching 600 hours, all of the tested products had thermistor characteristics at a level not abnormal. This means that there are no problems when the dimethyl polysiloxane silicone is used as the coating material.

Further, the thermistors likewise coated with the dimethyl polysiloxane silicone were subjected to 1000 cold-hot cycles ranging from -40°C to 130°C (30 minutes per cold or hot cycle). As a result, it was confirmed that neither cracks nor peeling-off were found in all of the silicone coatings. This result is presumably attributable to, as one factor, the fact of the silicone being a chemically and physically stable elastomer, and as another important factor, the fact of the silicone having the water repelling effect.

Usually, water repellency is evaluated through the steps of coating resin or rubber over the surface of a flat plate, dripping a droplet of water (saline water), and measuring the wetting angle of the water droplet. In general, when the wetting angle is not less than 90°, the target resin or rubber is defined as having water repellency. It is confirmed that the silicone has the wetting angle of about 103°C (dimethyl polysiloxane) and therefore exhibits the positive water repelling action. Accordingly, the droplet of water (saline water) having attached to the thermistor's coating cannot reside on the coating surface and is moved away from the coating surface at once. It can be hence said that a pseudo dry surface is continuously formed on the coating surface and corrosion is hard to occur.

The silicone used for the evaluation is of the addition polymerization hardening type. In general, silicone of the addition polymerization type is easier to uniformly form a coating and provides a better finish appearance than that of the condensation polymerization type. Therefore, the silicone of the addition polymerization type is more preferable when used in the present invention. Because the silicone of the condensation polymerization type hardens while reacting with moisture in air and generating secondary products, it has variations in the hardening rate and faces a difficulty in developing one part to mass-produced parts having the same characteristics. Further, if the secondary products remain in the coating, heat resistance and water resistance of the coating are possibly adversely affected. In contrast, the silicone of the addition polymerization type is advantageous in that, because it is positively hardened just by heating, a reliable coating can be formed in a short time so long as temperature control is performed in a proper manner.

**Table 1**

| Sample No. | Hours until corrosion break (h) |
|---|---|
| 1 | 600 h |
| 2 | 720 h |
| 3 | 792 h |
| 4 | 720 h |
| 5 | 720 h |
| 6 | 744 h |
| 7 | 672 h |
| 8 | 624 h |

For comparison, a similar saline water spray test was conducted on a thermistor with no coating. As a result, a corrosion break occurred in 48 hours. It is thus concluded that the silicone is a coating material having high reliability in basic characteristics, such as resistance against both corrosion and cold-hot cycles, when used to form the thermistor's coating.

### (Fourth Embodiment)

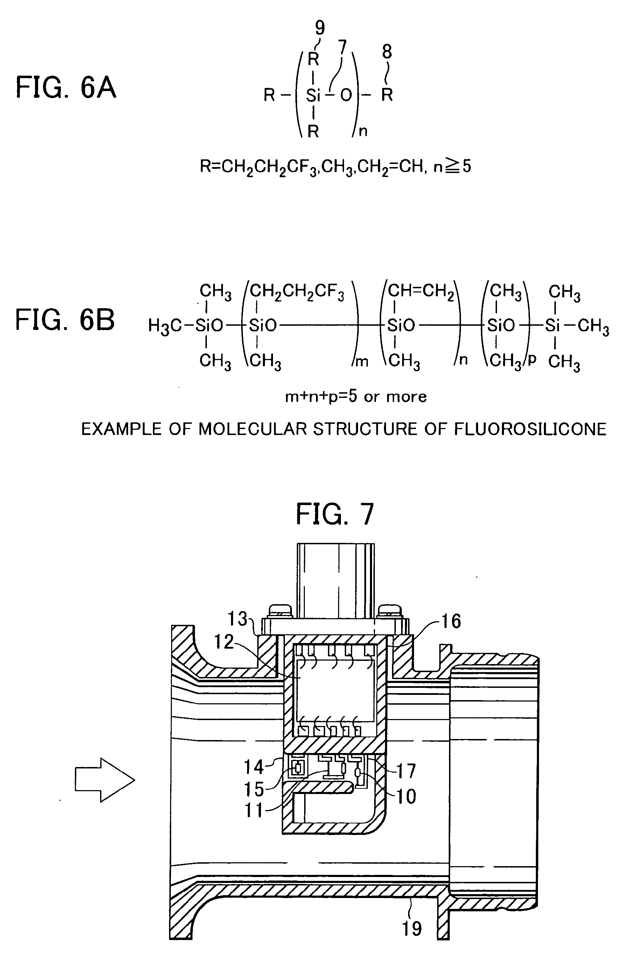

Fig. 6 shows a fluorosilicone elastomer having a molecular structure different from that of the silicone elastomer used in the third embodiment. Fig. 6(a) shows a general formula of the fluorosilicone elastomer, and Fig. 6(b) shows one specific example of the molecular structure thereof. One practical compound representing the fluorosilicone elastomer is γ-trifluoropropyl polysiloxane. Comparing with dimethyl polysiloxane used in the third embodiment, the fluorosilicone elastomer shown in Fig. 6 is preferable especially in consideration of that the temperature sensor of the present invention is used as one of automobile-loaded electronic equipment. In other words, even if fluorosilicone is directly contacted with gasoline vapor or gasoline, a phenomenon of swelling of the silicone can be avoided.

Additionally, the molecular structure of polysiloxane can be modified so that dimethyl polysiloxane is kept from swelling when contacted with gasoline. From this point of view, the silicone having coordinated fluorine atoms can be said as being silicone modified so as to have improved swelling resistance against gasoline. Note that the fluorosilicone shown in Fig. 6 is known as denatured silicone.

More specifically, γ-trifluoropropyl polysiloxane is silicone having a structure in which a γ-trifluoropropyl group 9 is coordinated as an organic group to constitute a side chain of the siloxane bond 7 that is a main chain of the silicone. The coordination of the γ-trifluoropropyl group 9 in the side chain reduces the molecular rotation steric hindrance specific to the silicone and increases intermolecular forces between polymers, thereby developing the swelling resistance (drag) against gasoline. As a result of actually measuring the swelling rate, it was confirmed that, after dipping in ordinary gasoline for 120 hours, the volume of dimethyl polysiloxane increased 230%, while an increase in the volume of fluorosilicone was 35%, i.e., out of the problem. In the above test, dimethyl polysiloxane was dipped in gasoline. Considering that environments of an actual automobile are not so severe, dimethyl polysiloxane is sufficiently endurable from the practical point of view.

Table 2 given below shows the results of exposure tests conducted by supplying a current to axial type thermistors coated with the fluorosilicone having the molecular structure shown in Fig. 5 under exposure of the thermistors to a saline water spray (according to JIS Z2371). Even after the lapse of 500 hours, all of the tested products had thermistor characteristics at a level not abnormal. This means that there are no problems when the fluorosilicone is used as the coating material. Further, the thermistors likewise coated with the fluorosilicone were subjected to 1000 cold-hot cycles ranging from -40°C to 130°C (30 minutes per cold or hot cycle). As a result, it was confirmed that neither cracks nor peeling-off were found in all of the fluorosilicone coatings.

**Table 2**

| Sample No. | Hours until corrosion break (h) |
|---|---|
| 1 | 559 h |
| 2 | 678 h |
| 3 | 720 h |
| 4 | 552 h |
| 5 | 576 h |
| 6 | 624 h |
| 7 | 678 h |
| 8 | 624 h |

The object of the present invention can also be achieved by using, instead of the fluorosilicone described above, a silicone elastomer that has recently been commercialized by Shin-etsu Chemical Industry Co., Ltd. under the trade name of "SIFEL". SIFEL is a polymer alloy of silicone and a fluorocarbon polymer, and it is a new material having adhesion, pliability and easiness in handling of the silicone, as well as solvent resistance of the fluorocarbon resin.

In addition to the silicone elastomer, a polyamideimide -based coating agent can also be used. This type of coating material is commercialized by Hitachi Chemical Co., Ltd. under the trade name of "HIMAL".

Fig. 7 shows a practical example in which the temperature sensor of the present invention is loaded as one of electronic equipment on an automobile. There are known a variety of automobile-loaded electronic equipment, and it is difficult to explain all kinds of the equipment herein. For that reason, the following description is made of the structure of the automobile-loaded electronic equipment and the embodiment of the present invention in connection with a thermal type flowmeter for measuring the flow rate of intake air, shown in Fig. 7, which is assumed to be a typical example of the automobile-loaded electronic equipment. As a matter of course, the present invention is applicable to not only the temperature sensor used in the thermal type flowmeter described here, but also to all the temperature sensors used in various kinds of automobile-loaded electronic equipment having other functions and other structures.

First, the thermal type flowmeter will be described in brief. The thermal type flowmeter is a sensor that has recently quickly succeeded in receiving popularity in the market for measurement of intake air. The thermal type flowmeter comprises a heating resistor 10 and a temperature sensitive resistor 11. The heating resistor 10 is always heated and controlled to be held at a constant temperature by a constant temperature control circuit 12 so that a constant temperature difference is maintained with respect to the temperature sensitive resistor 11 for measuring the air temperature.

The heating resistor 10 is installed to locate in airflow, and therefore the surface of the heating resistor 10 radiating heat to the airflow serves as a heat radiant surface, i.e., a heat transfer surface. The amount of heat deprived by the airflow through heat transfer is converted into an electrical signal, thereby measuring the flow rate of intake air. Looking at a general structure, a body 13 holds the thermal type flowmeter while introducing the intake air so as to flow therethrough. The body 13 defines a sub-passage 14 through which a part of the whole intake air passes. In the sub-passage 14, there are disposed the heating resistor 10, the temperature sensitive resistor 11, and a temperature sensor (thermistor according to the first embodiment) 15 for measuring the intake air temperature. Those resistors and the constant temperature control circuit 12 transfer respective electrical signals through a terminal 17 that is made of a conductive member and is buried in a case 16.

The temperature sensor 15 in this embodiment does not serve as a sensor for measuring the intake air temperature and outputting a signal for driving the thermal type flowmeter. Namely, it is disposed in the thermal type flowmeter as a temperature sensor to measure the intake air temperature independently of the thermal type flowmeter. In many cases, a signal from the temperature sensor 15 is directly transmitted to a control unit and is used as a signal for combustion control of an internal combustion engine and for self-diagnosis. Accordingly, if the temperature sensor 15 for measuring the intake air temperature is broken due to corrosion and is disabled from transferring the temperature signal, the automobile may no longer maintain the satisfactory combustion state, or the engine may be stalled. For that reason, the automobile-loaded temperature sensor 15 is required to be supplied as a product having sufficient reliability in corrosion resistance. Since the structure of the temperature sensor 15 of the present invention is superior in corrosion resistance as described above, it can be said as being suitable for the automobile-loaded electronic equipment.

### (Fifth Embodiment)

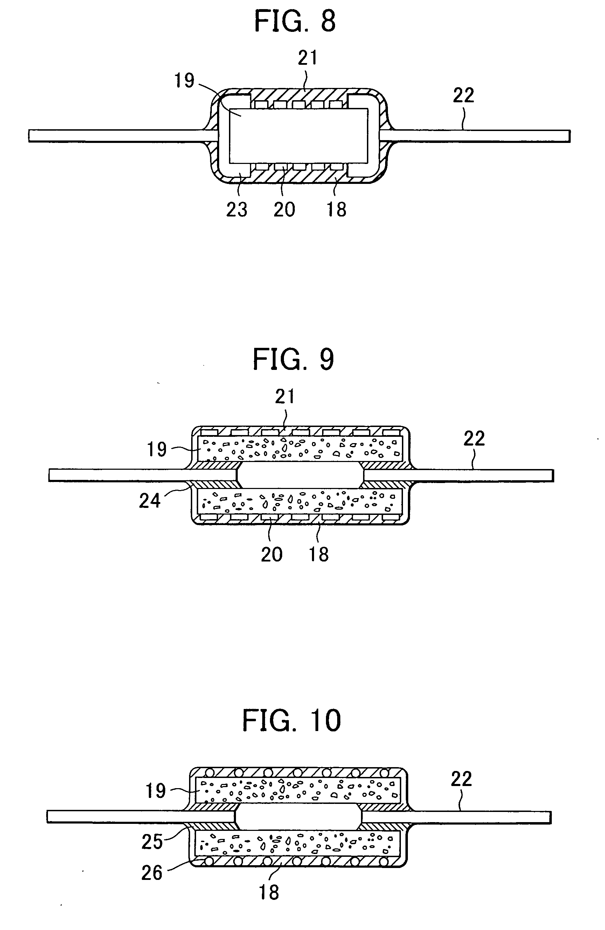

The structure of the temperature sensor of the present invention is not limited in application only to the axial type thermistor. Examples of application to other types of the temperature sensors will be described below with reference to Figs. 8, 9 and 10.

Figs. 8, 9 and 10 each show the temperature sensitive resistor 11 for measuring the intake air temperature to control the heating resistor 10 in the thermal type flowmeter shown in Fig. 7. In this embodiment, the coating material used in the present invention is applied as a protective film 18 for the temperature sensitive resistor 11. The structure of the temperature sensitive resistor 11 will be described below.

First, the structure of a capped resistor employed as one example of the temperature sensitive resistor 11 is shown in Fig. 8. To obtain the temperature sensitive resistor 11 for use in the thermal type flowmeter shown in Fig. 7, a solid ceramic bobbin having an outer diameter of about φ 0.5 to φ 2 mm and a length of about 2 to 4 mm is prepared as a base 19. A thin film 20 of a conductive metal is coated on an outer surface of the base 19 by a suitable thin-film forming process, such as sputtering, vapor deposition, or plasma spraying, and is baked. The thin film 20 serving as a resistor is thereby formed. After forming the thin film 20 (thickness in the range of about 0.5 µm to 1 µm), a spiral cut groove 21 is formed in the thin film 20 by laser trimming such that a thin-film resistor having a resistance value of about 400 Ω to 1000 kΩ is obtained.

On the other hand, a lead 22 is made of platinum, an alloy containing platinum, another pure metal such as nickel, or another alloy such as stainless steel, and has an outer diameter of about φ 0.15 to φ 0.2 mm. A cap 23 to which the lead 22 is joined is made of, e.g., stainless steel. After welding the cap 23 to the lead 22, a resulting assembly is inserted or press-fitted over each of opposite ends of the base 19 including the resistor formed on it. Then, an elastomer coating similar to that described above is formed, as the protective film 18 for the thin-film resistor, to cover an area in which the thin-film resistor has been formed, whereby the temperature sensitive resistor 11 is completed.

Fig. 9 shows another example of the temperature sensitive resistor 11. A hollow ceramic pipe having an outer diameter of about φ 0.5 to φ 2 mm and a length of about 2 to 4 mm is prepared as a base 19. A thin film 20 of a conductive metal is coated on an outer surface of the base 19 by a suitable thin-film forming process, such as sputtering, vapor deposition, or plasma spraying, and is baked. The thin film 20 serving as a resistor is thereby formed.

Then, a lead 22 is inserted into each of opposite ends of the base 19, i.e., the ceramic pipe, with a conductive adhesive 24 applied over the lead end. By baking a resulting assembly, the leads 22 and the base 19 are fixedly bonded to each other while establishing conductivity between them. Further, a spiral cut groove 21 is formed in the thin film 20 by laser trimming such that the temperature sensitive resistor 11 in the form of a thin-film resistor having a resistance value of about 400 Ω to 1000 kΩ is obtained. Finally, an elastomer coating similar to that described above is formed, as the protective film 18 for the temperature sensitive resistor 11, to cover an area in which the thin-film resistor has been formed, whereby the temperature sensitive resistor 11 is completed.

Fig. 10 shows still another example of the temperature sensitive resistor 11. A hollow ceramic pipe having an outer diameter of about φ 0.5 to φ 2 mm and a length of about 2 to 4 mm is prepared as a base 19. A lead 22 is fixedly bonded to each of opposite ends of the base 19, i.e., the ceramic pipe, by using a vitreous adhesive 25. Then, a resistance wire 26 made of a conductive metal is spirally wound over the surface of the base 19 from a start point at the end of one lead 22 to the end of the other lead 22.

Since a resistance value is decided depending on the number of windings of the resistance wire 26, a target resistance value can be obtained by controlling the number of windings to a predetermined value. Finally, an elastomer coating similar to that described above is formed, as the protective film 18 for the temperature sensitive resistor 11, to cover an area in which the thin-film resistor has been formed, whereby the temperature sensitive resistor 11 is completed.

In most of actual products, the protective films 18 for the temperature sensitive resistors 11 of the types having the structures shown in Figs. 9 and 10 are made of glass at present. From the viewpoint of environmental protection, however, it has recently become important to use materials not containing lead. While there are various kinds of glasses, lead oxide (PbO) glass is mixed in the protective films 18 for the temperature sensitive resistors 11 in many cases. The lead oxide glass mixed as one of glass components takes an important role and serves as a basic material for realizing baking at a lower temperature, adjusting the coefficient of linear expansion, and increasing acid resistance of a glass coating. In spite of that fact, some alternative must be used under circumstances in which any kind of glass containing lead oxide is no longer used according to legal regulations.

In the above-described embodiments of the present invention, the viscoelastic elastomer having the adhesive group is employed as the protective film 18 for the temperature sensitive resistor 11 instead of the glasses employed at present. Although all kinds of glasses do not always contain lead oxide, lead is contained in many kinds of glasses including those ones having relatively low melting points. In contrast, the elastomer does not contain harmful substances to be controlled according to legal regulations, such as lead, cadmium, and mercury, and hence can provide the temperature sensitive resistor that is safe from the viewpoint of environmental protection. Further, in the case of glass coating, the glass must be treated at temperature not lower than 500°C at minimum for baking. On the other hand, the elastomer used in the present invention can be treated at much lower temperature to form the same protective coating. This means that characteristic changes are reduced and the energy cost can be saved with the above-described embodiments.

Additionally, since silicone is inert to human bodies, an environmentally friendly product from this point of view as well can be obtained by using silicone to form the protective film for the temperature sensitive resistor.

According to the present invention, as fully described above, a temperature sensor having high reliability in resistance under corrosive environments can be manufactured. It is therefore possible to provide a highly-reliable temperature sensor that is suitable used in not only automobiles, but also in plant facilities, industrial equipment, and consumer-oriented electronic products.

While the invention has been described with reference to the above specific embodiments, it is clear for an expert skilled in the art that parts of the structure of the described different devices and the respective compositions may be exchanged or combined to form further embodiments optimized for the respective desired application. Those modifications based on combinations of parts of the above described embodiments, therefore, shall be disclosed implicitly by the above description, as far as they are readily apparent for an expert skilled in the art.

## Claims

1. A temperature sensor comprising:
a device of which characteristics, including a resistance value, are changed with temperature changes;
electrodes (2) electrically connected to opposite ends of said device directly or through another member;
an inorganic insulating member for sealing off or covering at least a part of said electrodes and said device; and
leads (3) connected to said electrodes (2),
wherein a coating (6) of an elastomer having viscoelastic characteristics is formed to cover at least connected portions between said electrodes (2) and said leads (3) directly or with another material interposed therebetween.

2. Temperature sensor according to Claim 1, **characterized in that** said elastomer is a synthetic high polymer having an adhesive group with respect to the connected portions between said electrodes (2) and said leads (3) or connected portions between said resistor (11) and said leads (3).

3. Temperature sensor according to Claim 1 or 2, **characterized in that** said elastomer is made of a viscoelastic body having a modulus of elasticity not more than 500 MPa.

4. Temperature sensor according to Claim 1, 2 or 3 **characterized in that** said elastomer is a synthetic amorphous high polymer.

5. Temperature sensor according to at least one of the preceding Claims, **characterized in that** said elastomer has a glass transition point of -30°C or below.

6. Temperature sensor according to at least one of the preceding Claims, **characterized in that** said elastomer has a hydrophobic group bonded to a main chain thereof.

7. Temperature sensor according to at least one of the preceding Claims, **characterized in that** said elastomer is made of silicone containing an organic group coordinated to a siloxane bond serving as a main chain.

8. Temperature sensor according to Claim 7, **characterized in that** the organic group of said silicone is a methyl group or a phenyl group.

9. Temperature sensor according to Claim 7 or 8, **characterized in that** a fluorine-containing organic group is coordinated to the siloxane bond serving as the main chain of said silicone.

10. Temperature sensor according to at least one of Claims 7-9, **characterized in that** said silicone containing the fluorine-containing organic group coordinated therein is γ-trifluoropropyl polysiloxane.

11. Temperature sensor comprising:
a device including a resistor; and
leads (3) extending toward opposite ends of said device and electrically connected to said device directly or through another member,
wherein a coating (6) of an elastomer having viscoelastic characteristics is formed to cover at least said resistor directly or with another material interposed therebetween.

12. Temperature sensor according to Claim 11, **characterized in that** said elastomer is a synthetic high polymer having an adhesive group with respect to the connected portions between said electrodes (2) and said leads (3) or connected portions between said resistor and said leads (3).

13. Temperature sensor according to Claim 11 or 12, **characterized in that** said elastomer is made of a viscoelastic body having a modulus of elasticity not more than 500 MPa.

14. Temperature sensor according to at least one of Claims 11-13, wherein said elastomer is a synthetic amorphous high polymer.

15. Temperature sensor according to at least one of Claims 11-14, **characterized in that** said elastomer has the glass transition point being -30°C or below.

16. Temperature sensor according to at least one of Claims 11-15, **characterized in that** said elastomer has a hydrophobic group bonded to a main chain thereof.

17. Temperature sensor according to at least one of Claims 11-16, wherein said elastomer is made of silicone containing an organic group coordinated to a siloxane bond serving as a main chain.

18. Temperature sensor according to Claim 17, wherein the organic group of said silicone is a methyl group or a phenyl group.

19. Temperature sensor according to Claim 17 or 18, **characterized in that** a fluorine-containing organic group is coordinated to the siloxane bond serving as the main chain of said silicone.

20. Temperature sensor according to Claim 19, **characterized in that** said silicone containing the fluorine-containing organic group coordinated therein is γ-trifluoropropyl polysiloxane.
